# EUROPÄISCHE PATENTSCHRIFT

(11) **EP 2 045 497 B1**
(45) Veröffentlichungstag und Bekanntmachung des Hinweises auf die Patenterteilung: **16.04.2014**
(21) Anmeldenummer: 08015182.2
(22) Anmeldetag: 28.08.2008
(51) Int. Cl.: F16K 35/06, F16K 35/08

(54) **Ventilverriegelungssystem**
Valve locking system
Système de verrouillage de soupape

(30) Priorität: 28.08.2007 DE 202007011948 U
(43) Veröffentlichungstag der Anmeldung: 08.04.2009
(73) Patentinhaber: Haake Technik GmbH, 48691 Vreden (DE)
(72) Erfinder: Schoppen, Jens, D-48691 (DE)
(74) Vertreter: Habbel, Hans-Georg

(56) Entgegenhaltungen:
- EP-B1- 0 167 276
- DE-C- 48 426
- DE-T2- 69 900 370
- GB-A- 2 045 855
- US-A- 4 723 569

## Beschreibung

Die Erfindung bezieht sich auf ein Ventilverriegelungssystem, das mit zwei Schlüssel arbeitet, wobei diese zwei Schlüssel mit entsprechenden Codierrollen im Inneren des Verriegelungsgehäuses zusammenarbeiten.

Ventilverriegelungssysteme haben die Aufgabe, zu verhindern, dass das Ventil unbefugt betätigt werden kann, so dass eine unbefugte Veränderung des Zustandes des Ventiles ausgeschlossen ist.

Diese Verriegelungssysteme werden daher als gesondertes Bauteil zwischen das Ventil und die Ventilbetätigung eingeschaltet, wobei dieses gesonderte Bauteil im wesentlichen die Verbindungsmittel zwischen dem Ventilbetätigungsrad und der Ventilspindel besitzt.

Weiterhin haben Ventilverriegelungssysteme die Aufgabe, zu gewährleisten, dass nur eine festgelegte betriebliche Abfolge durchlaufen werden kann. Normalerweise arbeiten Ventilverriegelungssysteme mit mehreren Schlössern und Schlüsseln. Ventilverriegelungen können nur betätigt werden, wenn sich beide Schlüssel in der Verriegelung befinden (DE 699 00 370 T2). Dabei sind die Schlüssel individuell codiert. Ein Schlüssel mit falscher Codierung kann nicht in die Verriegelung eingeführt werden bzw. kann diese nicht freigeben. Die jeweiligen Schlüssel können nur entnommen werden, wenn sich das Ventil in einer bestimmten Position befindet. Ist ein Schlüssel entnommen, so ist der andere in der Verriegelung gefangen. Üblicherweise ist es so, dass der Schlüssel nur entnommen werden kann, wenn das Ventil ganz geöffnet ist und der andere Schlüssel nur entnommen werden kann, wenn das Ventil vollkommen geschlossen ist.

Ventilverriegelungssysteme für handbetätigte Ventile werden in Anpassung an die unterschiedlichsten im Einsatz befindlichen Spindelformen in verschiedenen Ausführungen benötigt. Der Regelfall ist der, dass bei diesen Verriegelungssystemen die Endlage eingestellt werden kann. Häufig werden für die Endlage die Positionen "Ventil ganz geöffnet" und "Ventil ganz geschlossen" gewählt, wobei aber auch andere Ventilpositionen möglich sind.

Die Verbindung zwischen der Ventilspindel und dem eigentlichen Schloß des Verriegelungssystems erfolgt dabei über eine Hohlwelle, die an ihrer Außenseite Zähne für eine Sperrklinke und in ihren Endbereichen Aufnahmen für Adapter aufweist, die dem Anschluß der Spindel einerseits und des Handrades oder Betätigungshebels andererseits dienen.

Ventilverriegelungssysteme werden überall dort eingesetzt, wo eine Ablauffolge für Ventile zur Erhöhung der Personen- und Anlagensicherheit beitragen. Häufig sind das Ölbohrinseln, Chemie- und Raffineriewerke, die Gasindustrie sowie die Anlagen der Kernenergie.

Bei dem mit wenigstens einem üblicherweise aber zwei Schlüssel arbeitenden Verriegelungssystem, die in das Verriegelungsgehäuse eingeführt werden müssen, ist üblicherweise die an die Schlüsselcodierung angepasste Codierrolle relativ weit geschützt im Inneren des Verriegelungsgehäuses angeordnet. Hierbei kann es im Stand der Technik vorkommen, dass der einzuführende Schlüssel über den großen Teil seiner Länge in das Gehäuse eingeführt werden kann, bevor er mit der Codierrolle in Kontakt kommt, die dann feststelle, dass der Schlüssel passend oder nicht passend ist. Hierbei kommt es immer wieder vor, dass, wenn ein nicht passender Schlüssel eingeführt wird, der Bediener der Auffassung ist, dass hier durch Eins oder sonstige Verschmutzung ein Verklemmen des Schlüssels oder Behindern des Schlüssels erfolgt und versucht nunmehr mit Gewalt den Schlüssel in das Gehäuse einzutreiben, was zur Zerstörung der Codierrolle führen kann.

So wird in der gattungsbildenden EP 0 167 276 B1 ein Verriegelungssystem mit zwei Schlüsseln und entsprechenden Codierrollen im Inneren des Verriegelungsgehäuses beschrieben, wobei jeder Schlüssel einen Schlüsselkopf aufweist, der in codierten Abständen Vorsprünge besitzt, so dass ein so ausgebildeter Schlüssel nur vollständig in das Schloss eingesetzt werden kann, wenn die Vorsprünge mit ortsfest vorgesehenen Ausnehmungen übereinstimmen. Die Anordnung der Vorsprünge am Schlüsselkopf wird dadurch, dass der Schlüssel, bevor festgestellt wird, dass die Codierungen nicht übereinstimmen, relativ weit in das Schloss eingeschoben.

Der Erfindung liegt daher die Aufgabe zugrunde, hier derart Abhilfe zu schaffen, dass ein Einführen eines nicht zu den entsprechenden Codierrollen gehörenden Schlüssels schon in das Gehäuse der Verriegelungsvorrichtung oder des Verriegelungssystems nicht möglich ist.

Diese der Erfindung zugrunde liegende Aufgabe wird dadurch gelöst, dass bei einem Verriegelungssystem mit zwei Schlüsseln und entsprechenden Codierrollen im Inneren des Verriegelungsgehäuses vorgeschlagen wird, je eine im vorderen Einführungsbereich für die Schlüssel vorgesehene Schlüsselkontrolle anzuordnen, durch die eine Einführung nur des zur jeweiligen Codierrolle passenden Schlüssels in das Verriegelungsgehäuse sichergestellt ist, so dass jeder der Schlüssel in einem Einführungsschlitz des Verriegelungsgehäuses überprüft wird und nur der für diesen Einführungsschlitz und damit für die in diesem Einführungsschtitz angeordnete Codierrolle passende Schlüssel in das Verriegelungsgehäuse eingeführt werden kann.

Der Schlüssel kann also nicht mehr weit in das Gehäuse eingeführt werden, bevor kontrolliert wird, ob er zur entsprechenden Codierrolle passt, sondern der Schlüssel wird bereits im Einführungsbereich, also im Einführungsschlitz des Gehäuses überprüft und nur der für diesen Einführungsschlitz und damit für die in diesem Einführungsschlitz angeordnete Codierrolle passende Schlüssel kann in das Gehäuse eingeführt werden.

Hierdurch wird eine relativ große Sicherheit erreicht, so dass ein gewaltsames Einführen eines Schlüssels in ein Verriegelungsgehäuse ausgeschlossen ist.

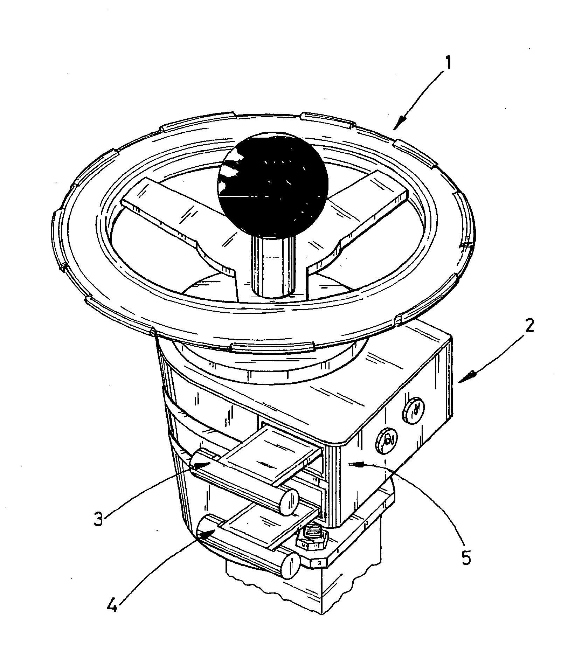

Ein Ausführungsbeispiel der Einführung zeigt die beigefügte Zeichnung.

In der Zeichnung ist mit 1 ein Handrad zur Ventilbetätigung bezeichnet, wobei zwischen dem in der Zeichnung nicht dargestellten Ventil und diesem Handrad 1 ein Verriegelungsgehäuse 2 vorgesehen ist. In dieses Verriegelungsgehäuse 2 können die beiden Schlüssel 3 und 4 eingesetzt werden, die mit der innerhalb des Verriegelungsgehäuses 2 angeordneten Codierrolle in Kontakt kommen können und eine Freigabe des Handrades und damit des Ventils oder ein Arretieren des Handrades und damit des Ventils bewirken.

Mit 5 ist der Einführungsbereich für die Schlüssel 3 und 4 bezeichnet, und gemäß der Neuerung ist bereits in diesem Einführungsbereich eine Kontrollanordnung für die Schlüssel vorgesehen, so dass sichergestellt ist, dass nur der zu der jeweiligen Codierrolle passende Schlüssel eingeführt werden kann.

## Patentansprüche

1. Ventilverriegelungssystem mit zwei Schlüsseln (3, 4) und entsprechenden Codierrollen im Inneren des Verriegelungsgehäuses,
**gekennzeichnet durch**,
je eine im vorderen Einführungsbereich (5) für die Schlüssel (3, 4) vorgesehene Schlüsselkontrolle, **durch** die eine Einführung nur des zur jeweiligen Codierrolle passenden Schlüssels (3, 4) in das Verriegelungsgehäuse (2) sichergestellt ist, so dass jeder der Schlüssel (3, 4) in einem Einführungsschlitz des Verriegelungsgehäuses (2) überprüft wird und nur der für diesen Einführungsschlitz und damit für die in diesem Einführungsschlitz angeordnete Cordierrolle passende Schlüssel (3, 4) in das Verrieglungsgehäuse 82) eingeführt werden kann.

## Claims

1. Valve-locking system with two keys (3, 4) and corresponding coding rolls in the interior of the locking housing;
**characterised by**
a key-checking system provided in the front insertion area (5) for each of the keys (3, 4), by means of which it is possible to insert only the correct key (3, 4) for the intended coding roll into the locking housing (2), in such a way that each of the keys (3, 4) is checked in an insertion slot of the locking housing (2), and only the key (3, 4) which fits this insertion slot, and therefore the coding roll arranged within this insertion slot, can be inserted into the locking housing (82).

## Revendications

1. Système de verrouillage de vanne à deux clés (3, 4) et avec des rouleaux de codage correspondants à l'intérieur du boîtier de verrouillage,
**caractérisé par**
un contrôle de clé prévu chaque fois dans la zone d'introduction avant (5) des clés (3, 4), contrôle assurant que ne soit introduite dans le boîtier de verrouillage (2) que la clé (3, 4) allant avec le rouleau de codage respectif, afin que chacune des clés (3, 4) soit vérifiée dans une fente d'introduction du boîtier de verrouillage (2) et afin que seule la clé (3, 4) allant dans cette fente d'introduction et donc avec le rouleau de codage agencé dans ladite fente d'introduction puisse être introduite dans le boîtier de verrouillage (2).
